(19) Europäisches Patentamt
European Patent Office
Office européen des brevets

(11) **EP 4 703 704 A1**

(12) **EUROPEAN PATENT APPLICATION**

(43) Date of publication:
04.03.2026 Bulletin 2026/10

(21) Application number: 24197637.2

(22) Date of filing: 30.08.2024

(51) International Patent Classification (IPC):
**G01N 1/38** (2006.01)   **G01N 15/0227** (2024.01)
**G01N 15/075** (2024.01)

(52) Cooperative Patent Classification (CPC):
**G01N 1/38; G01N 15/0227; G01N 15/075;**
G01N 15/1433; G01N 2015/0053; G01N 2015/0294;
G01N 2015/1493; G01N 2015/1497

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ETH Zurich**
**8092 Zurich (CH)**

(72) Inventors:
• **MAZZOTTI, Marco**
  **8044 Zürich (CH)**
• **BIRI, Daniel**
  **8910 Affoltern am Albis (CH)**
• **RAJAGOPALAN, Ashwin Kumar**
  **Salford, M50 3AS (US)**

(54) **DEVICE FOR REDUCING THE SOLID DENSITY OF A SUSPENSION OF PARTICLES TO ALLOW MONITORING AND CHARACTERIZING THE SUSPENSION VIA OPTICAL INSTRUMENTS**

(57)    The present invention relates to a device (1) for reducing a particle density of a sample of a suspension of particles in a liquid, the device comprising a measurement flow path (13) for characterizing the sample of the suspension, wherein the device (1) is configured to withdraw a sample of the suspension residing in a main vessel (100), and to dilute the sample, particularly when a measure indicative of the particle density in the sample is above a pre-defined threshold.

Fig. 1

**Description**

The present invention relates to a device for reducing the solid density of a suspension of particles, e.g., to allow characterizing the suspension, particularly monitoring the suspension via optical instruments, e.g., in case of a supersaturated solution during crystallization.

Crystallization is an important and widely used purification step during the production of fine chemicals such as active pharmaceutical ingredients, agrochemicals and food additives. While the importance of crystallization is widely acknowledged and extensive research has been conducted on the underlying phenomena in controlled environments, there remains a significant knowledge gap when it comes to understanding the same phenomena under real-world industrial conditions.

A key method for investigating crystallization processes is measuring the particle size distribution (PSD). Commercial in situ tools known in the prior art can detect changes in the PSD, however their precision and accuracy are limited. Usually, such tools are complemented by using more accurate offline techniques for particle characterization such as Laser Diffraction.

The most advanced characterization techniques typically rely on optical imaging and image analysis. As these systems collect more data, they usually allow for the creation of a particle size and shape distribution (PSSD) (Cote, A.; Erdemir, D.; Girard, K. P.; Green, D. A.; Lovette, M. A.; Sirota, E.; Nere, N. K. Perspectives on the Current State, Challenges, and Opportunities in Pharmaceutical Crystallization Process Development. Cryst. Growth Des. 2020, 20 (12), 7568-7581.). These analytical tools cannot be used in situ under industrially relevant conditions due to the high densities of the particles in the suspensions. With increasing particle densities, it becomes more difficult to distinguish individual particles. Eventually, at high particle densities, any form of characterization via optical methods or resistive pulse sensing will fail.

The particle density levels acceptable during a measurement depend on the particle size and shape and cannot be known in advance. However, industrial processes usually exceed these acceptable levels by one to three orders of magnitude. In many processes the particle density is also changing over time and therefore any widely adoptable dilution system needs to be capable of automatically adapting to these changes.

Based on the above, the problem to be solved by the present invention is to provide a device that efficiently and accurately prepares a sample of a suspension, particularly so as to allow measuring the sample, particularly by direct optical characterization of the sample's solid phase, and possibly indirectly of the sample's liquid phase.

This problem is solved by a device having the features of claim 1.

Preferred embodiments of theses aspects of the present invention are stated in the corresponding dependent claims and are described below.

According to claim 1, a device for reducing the particle density of a sample of a suspension of particles in a liquid is disclosed, particularly to allow monitoring the sample via optical instruments, wherein the device comprises:

-    a measurement flow path for measuring the sample of the suspension (particularly for acquiring measurement data from the sample such as images), wherein the measurement flow path is configured to be brought in flow connection with a main vessel to guide a sample of the suspension residing in the main vessel from the main vessel through the measurement flow path and back into the main vessel,

-    a mixing vessel configured to be brought in flow connection with the main vessel via the measurement flow path to withdraw a sample of the suspension from the main vessel into the mixing vessel, and wherein the mixing vessel is configured to be brought in flow connection with the measurement flow path such that a sample of the suspension residing in the mixing vessel can be guided from the mixing vessel into the measurement flow path (and particularly back to the mixing vessel to establish an internal loop for circulating the sample from the mixing vessel through the measurement flow path), and

-    a cross-flow filter configured to draw off clear liquid from the suspension of the main vessel into the mixing vessel to dilute a sample of the suspension residing in the mixing vessel,

wherein

the device is configured to automatically withdraw a sample of the suspension residing in the main vessel, and to automatically dilute the sample, particularly when a measure indicative of the particle density in the sample is above a pre-defined threshold.

In a preferred embodiment, for acquiring measurement data, particularly optical measurement data, particularly images, the measurement flow path can comprise one or several transparent portions (e.g. in form of a cell), allowing to inspect the sample of the suspension with one or more measurement devices, particularly cameras.

According to a preferred embodiment of the device, the device comprises an analyzing unit configured to

determine said measure based on measurement data, particularly images, acquired from the sample in the measurement flow path.

Particularly, the particle density can be assessed using different metrics such as the average pixel intensity and the average number of contours per image. The average pixel intensity is the average grayscale pixel intensity determined using e.g. 20 image pairs. The average number of contours per image can also be determined using the same set of images and, due to overlapping, is equal or smaller than the number of particles in the observed volume. Other measures may also be utilized. Particularly, according to a preferred embodiment of the device, said measure is above a pre-defined threshold in case the average pixel intensity is below a certain threshold value, particularly below the threshold value of 90 or if the average number of contours per image exceeds a pre-defined number, particularly 30. Depending on the observed suspension, these values/numbers may also be chosen differently. Furthermore, according to a preferred embodiment, the device can be configured to use an imaging system (e.g. a stereoscopic imaging device) used to perform the advanced particle characterization after the sample of the suspension has been sufficiently diluted, to also assess the state of dilution (i.e. the particle density in the sample). This reduces the number of components of the device according to the present invention in an advantageous manner. However, in preferred embodiments, the device according to the present invention is typically designed to be integrated or to operate in combination with existing offthe-shelf analytical tools employing imaging that are often difficult to embed software-wise. Therefore, according to a preferred embodiment of the device, the device comprises a camera to acquire said images to assess the state of dilution of the sample or a measurement device configured to acquire measurement data about the state of dilution of the sample. Alternatively, the device (particularly its analyzing unit) can be configured to receive said images or measurement data from an external camera or measurement device. Thus, embodiments of the present invention are conceivable, wherein only one camera or measurement device is used (e.g. an imaging system such as a stereoscopic imaging device) that is also used to eventually determine the particle size and shape distribution (PSSD) of the sample. On the other hand, when the device is integrated into an existing system having such an imaging system or measurement device, the device may have a separate camera or measurement device to assess the state of dilution of the sample so that the overall set-up comprises two different devices for assessing the state of dilution and for measuring the properly diluted suspension. Furthermore, the main vessel does not need to be a component of the device according to the present invention as the device can be connected to a main vessel of an existing setup that shall be used with the device according to the present invention. Alternatively, the main vessel may also form a part of the device according to the present invention.

According to a preferred embodiment of the device according to the present invention, the cross-flow filter comprises an inlet and a first and a second outlet, the inlet and the first outlet being configured to be brought in flow connection with the main vessel to guide suspension from the main vessel via the inlet along a filter element of the cross-flow filter back into the main vessel via the first outlet, wherein the second outlet is in flow connection with the mixing vessel allowing to draw off clear liquid from the suspension through the filter element into the mixing vessel to dilute a sample of the suspension residing in the mixing vessel.

Further, according to a preferred embodiment of the device, the device is configured to automatically initially dilute a sample of the suspension in the measurement flow path by emptying the sample into the mixing vessel and by pumping clear liquid from the cross-flow filter (particularly from its second outlet) into the mixing vessel.

Furthermore, according to yet another preferred embodiment, the device comprises a liquid level sensor (e.g. utilizing a magnetic float and a reed relay) configured to detect when the mixing vessel is full.

According to a further preferred embodiment of the device, the device is configured to further dilute the sample (e.g. in case said measure is still above the threshold) by returning a portion of the sample in the measurement flow path to the main vessel, by emptying a remaining portion of the sample into the mixing vessel, and by pumping clear liquid from the cross-flow filter (e.g. from its second outlet) into the mixing vessel.

Further, in a preferred embodiment of the device, the device comprises a controlling unit configured to determine said portion of the sample to be returned into the main vessel, wherein particularly a desired number of contours per image serves setpoint of the controlling unit, wherein particularly the controlling unit is a proportional control unit.

Particularly, to ensure that the sample remains representative, an upper limit is set for the portion ejected into the main vessel.

Furthermore, particularly, the device is configured to use the average pixel density of the images as said measure of the particle density in case the average pixel density is below or equal to a pre-defined threshold (e.g. 90), and wherein the device is configured to use the number of contours per image as said measure of the particle density (particularly a setpoint in the controlling unit) in case the average pixel density is above said threshold. Particularly, each detected contour corresponds to a particle of the suspension.

According to a yet another preferred embodiment of the device, the device comprises a first pump configured to continuously pump suspension from the main vessel through the cross-flow filter back into the main vessel.

Further, in a preferred embodiment, the device comprises a second pump configured to withdraw and dose clear liquid from the cross-flow filter (e.g. from its second outlet) into the mixing vessel.

Particularly, suspension flowing through the cross-flow filter continuously washes away any accumulated filter cake on the filter element (e.g. a sintered metal filter). This is also the case when the second pump actively withdraws clear liquid, as it particularly operates at a significantly lower flow rate compared to the inlet flowrate of the cross-flow filter. According to an alternative embodiment, instead of a second pump, also a valve can be used to dose clear liquid from the cross-flow filter (e.g. from its second outlet) into the mixing vessel, as the device can particularly provide sufficient pressure to allow clear liquid to flow from the cross-flow filter into the mixing vessel when the valve is open.

According to yet another preferred embodiment of the device, the device comprises a third pump configured to pump suspension from the main vessel into the measurement flow path. Particularly, the third pump can be a peristaltic pump.

In a further preferred embodiment of the device, the device comprises a first valve configured to connect the main vessel to the measurement flow path, particularly via the third pump, wherein the first valve is configured to adjust a flow rate of a suspension pumped (e.g. by the third pump) from the main vessel into the measurement flow path.

Further, in a preferred embodiment, the device comprises a second valve connecting the mixing vessel to the third pump upstream the first valve, wherein particularly the second valve is configured to adjust a flow rate of a suspension pumped (e.g. by the third pump) from the mixing vessel into the measurement flow path.

Furthermore, according to a preferred embodiment, the device comprises a third valve connecting the measurement flow path to the mixing vessel, wherein particularly the third valve is configured to adjust a flow rate of a suspension pumped (e.g. by the third pump) from the measurement flow path into the mixing vessel.

According to yet another preferred embodiment, the device comprises a fourth valve configured to connect the measurement flow path to the main vessel, wherein particularly the fourth valve is configured to adjust a flow rate of a suspension pumped (e.g. by the third pump) from the measurement flow path into the main vessel.

Furthermore, particularly, the afore-mentioned controlling unit is configured to control said valves and said pumps, particularly so as to conduct the above-described task of assessing the dilution state of the sample and, if necessary, of diluting the sample.

According to a preferred embodiment of the device, the cross-flow filter comprises a housing extending in an axial direction, wherein the inlet and the first outlet are arranged opposite to one another in the axial direction so that suspension can be passed from the inlet to the first outlet in the axial direction, wherein the housing delimits an internal space, wherein the filter element is arranged in the internal space and comprises a circumferential wall defining a passageway allowing suspension to flow from the inlet to the first outlet through said passageway, wherein the circumferential wall is permeable to the liquid of the suspension, such that clear liquid can be withdrawn through the circumferential wall via the second outlet, particularly in a flow direction running orthogonal to the flow direction of the suspension in said passageway.

According to a preferred embodiment of the device, a body (e.g. a cylindrical body) is inserted into the passageway of the filter element to decrease the volume of the passageway and to increase the liquid velocity of the suspension flowing from the inlet to the first outlet.

According to a further preferred embodiment, the device according to the present invention can comprise a plurality of cross-flow filters. According to a further embodiment, the cross-flow filter or each of said plurality of cross-flow filters can comprise more than one outlet to withdraw clear liquid. Particularly, according to an embodiment, the device can be configured to clean, particularly back-flush, the filter element of the cross-flow filter(s), wherein the device can be configured to withdraw clear liquid to clean/back-flush the filter element of the cross-flow filter from a further outlet of the cross-flow filter.

According to yet another aspect of the present invention, a method for reducing a particle density of a sample of a suspension of particles in a liquid is disclosed (particularly to allow monitoring the sample via optical instruments), wherein the method particularly uses a device according to the present invention, and wherein the method comprises the steps of:

- withdrawing a sample of a suspension residing in a main vessel, passing the sample through a measurement flow path, acquiring first measurement data, particularly first images, of the sample in the measurement flow path and estimating a measure indicative of the particle density of the sample by analyzing said first measurement data (particularly first images),

- if the measure is above a pre-defined threshold, the sample is diluted, otherwise second measurement data (particularly second images) are acquired from the sample in the measurement flow path and the PSSD of the sample is determined by analyzing said second measurement data (particularly second images), wherein diluting the sample comprises transferring a sample of the suspension from the main vessel into a mixing vessel and dosing clear liquid from the main vessel filtered by a cross-flow filter into the mixing vessel (particularly until the mixing vessel is full), wherein particularly the clear liquid is obtained by continuously guiding suspension from the main vessel via an inlet of the cross-flow filter into the cross-flow filter and along a filter element of the cross-flow filter back into the main vessel via a first outlet of the cross-flow filter, wherein the clear liquid is withdrawn from the suspension through the filter element via a second outlet of the cross-flow filter being in flow connection with the mixing vessel.

Particularly, according to a preferred embodiment of the method, said measure is above the pre-defined threshold in case the average pixel density of said first images is below a threshold value (e.g. 90) or if the average number of contours per image exceeds a pre-defined number, particularly 30.

Furthermore according to an embodiment of the method, after diluting the sample, the sample is circulated from the mixing vessel through the measurement flow path and third measurement data (particularly third images) are acquired from the sample in the measurement flow path and a measure indicative of the particle density of the sample is estimated by analyzing said third measurement data (particularly third images), wherein in case the measure is below a pre-defined threshold, fourth measurement data (particularly fourth images) are acquired from the sample in the measurement flow path and the PSSD of the sample is determined by analyzing said fourth measurement data (particularly fourth images), otherwise a sequence of at least one partial ejection of the diluted suspension from the mixing vessel back to the main vessel and further dilution comprising dosing clear liquid from the main vessel filtered by a cross-flow filter into the mixing vessel (particularly until the mixing vessel is full) is conducted, wherein particularly the clear liquid is obtained by continuously guiding suspension from the main vessel via an inlet of the cross-flow filter into the cross-flow filter and along a filter element of the cross-flow filter back into the main vessel via a first outlet of the cross-flow filter, wherein the clear liquid is withdrawn from the suspension through the filter element via a second outlet of the cross-flow filter being in flow connection with the mixing vessel.

Particularly, according to a preferred embodiment of the method, said measure is below the pre-defined threshold in case the average number of contours per image is below a pre-defined number, particularly 30.

Further features and advantages of the present inventions as well as embodiments of the present invention shall be described in the following with reference to the Figures, wherein

| | |
|---|---|
| Fig. 1 | shows a schematic illustration of an embodiment of the device according to the present invention; |
| Fig. 2 | shows a visualization of elongated crystals at increasing particle density (upper section, wherein the top four panels show simulated particles (black) and their projections (gray), representing perfectly imaged contours). Matching the contours from two perpendicular angles of the same particles enables accurate particle characterization. Overlapping contours reduce the number of detected, distinct particles, increasing with density. This leads to measurement biases, as depicted by the cumulative particle size distributions in the lower half of the Fig. 2.; |
| Fig. 3A | shows a cross-flow filter of an embodiment of the device according to the present invention; |
| Fig. 3B | shows a cross-flow filter of a further embodiment of the device according to the present invention; |
| Figs. 4A to 4E | show five phases of dilution according to an embodiment of the device and method of the present invention, wherein device operation is shown with the active parts of the device highlighted with dashed lines; |
| Fig. 5 | shows the cyclic nature of the measured pixel intensity as dilutions are performed (panels (a) and (b)). The pixel intensity value of 90 is indicated, as this is the threshold at which the dilution can be controlled using the average contour count per image. Panels (c) and (d) show the same for the contour count per image. Panel (e) shows a 2D contour representation of the PSSD. Panel (f) shows the volume-weighted mean characteristic length and width as a function of time; |
| Fig. 6 | shows 2D contour representations of populations A, B, and C (cf. panel (a), (b), and (c)). The different contour areas enclose 90, 50, and 10% of the total particle volume respectively. Panels (d) and (e) show the relative measurement error for $L_{1,v}$ for all three populations as a function of the pixel intensity and the contours per image respectively; |
| Fig. 7 | shows the time evolution of the pixel intensity and the contours per image respectively in panels (a) and (b). Panel (c) shows the time evolution of the volume-weighted mean average length, L1,v, and width, L2,v. Every vertical line indicates the addition of 2% solid; |
| Fig. 8 | shows the time evolution of the pixel intensity and the contours per image in panels (a) and (b). Panel (c) shows the time evolution of the volume-weighted mean average length, L1,v, and width, L2,v. Every vertical line indicates a milling operation; and |
| Fig. 9 | shows the time evolution of the volume-weighted mean length and width of needle-like GDM during |

cooling crystallization in panel (a). Panel (b) shows the temperature in both the main vessel and the measurement apparatus.

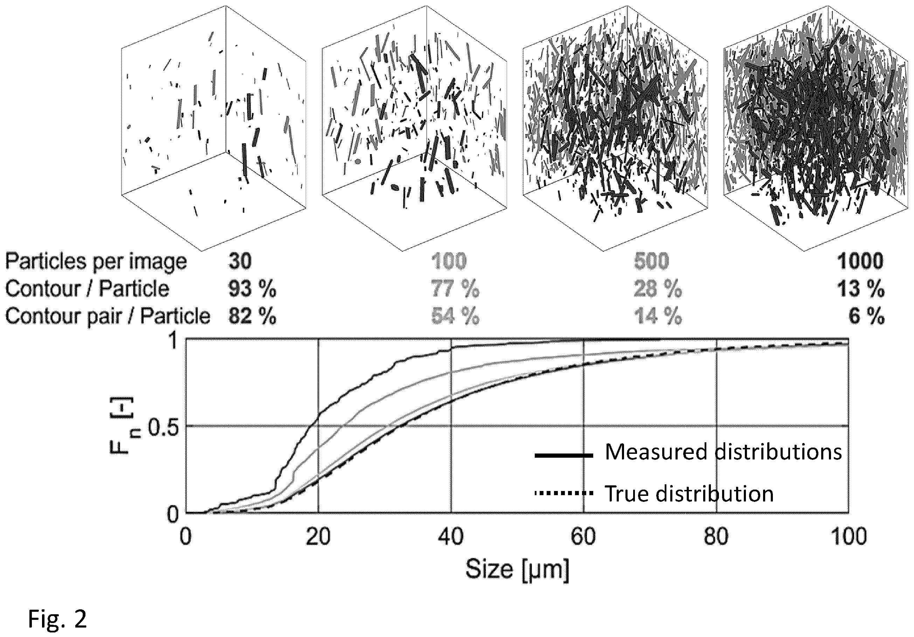

The present invention relates to a device 1 that allows to dilute a sample of a suspension S. This is often necessary to allow an optical characterization of the sample as a sample that has a particle density that is too high cannot be properly characterized as individual particles cannot be identified in case the sample is too dense. The difficulty of measuring particles at high densities is illustrated in Fig 2. Different numbers of elongated particles, namely 30, 100, 500, and 1000, were simulated in a 10 mm$^3$ box. The orthogonal projections of these particles onto vertical planes were used to create images showing particle contours (grey), which were then analyzed using a comprehensive image analysis pipeline, as reported in Rajagopalan, A. K.; Schneeberger, J.; Salvatori, F.; Bötschi, S.; Ochsenbein, D. R.; Oswald, M. R.; Pollefeys, M.; Mazzotti, M. A comprehensive shape analysis pipeline for stereoscopic measurements of particulate populations in suspension. Powder Technol. 2017, 321, 479-493. A contour is the outline of an object when viewed from a specific angle, or the outlines of multiple objects when one occludes another. For each particle density, the simulation was repeated until roughly 100 000 particles were simulated. As particle density increases and overlapping becomes more prevalent, the fraction of particles with distinct contours on an individual image decreases. Some advanced particle measurement tools use stereoscopic imaging to improve the characterization of the particles. These techniques require the matching of contours of the same object from different images. The fraction of particles for which such a contour pair is found decreases rapidly as the particle density increases. The cumulative particle size distributions (PSDs) measured at the different particle densities are shown in the lower panel of Fig. 2 with the black dashed line representing the true PSD. The results indicate a shift towards smaller particle sizes with increasing particle density, suggesting that larger particles are more difficult to detect and to characterize under these conditions.

The measurement of crystal growth and nucleation kinetics of different compounds has become increasingly automated. Advanced imaging techniques for online PSSD monitoring have successfully been employed in R&D environments, where experimental conditions with low particle density allow imaging without altering the suspension, i.e. dilution to reduce particle overlap. Imaging systems that measure growth, dissolution, primary and secondary nucleation kinetics of different compounds have been proposedly reported. However, the ability to accurately characterize dense suspensions during industrial crystallization using advanced imaging techniques requires reliable and automatic dilution of suspensions withdrawn from the crystallizer. Previous prototype dilution devices at the pilot- and lab-scale have showcased the value of such a technology but have faced challenges regarding robust and reliable dilution. These challenges include the long-term production of clear liquid at high particle densities, the mixing of a particle sample with clear liquid, and the quantification of the particle density for automatic control.

Particularly, the present invention therefore proposes an automated dilution device that facilitates the characterization of particles in suspensions with high solid weight fractions at the lab scale. Furthermore, the performance of the device has been evaluated by examining its reliability, the effect of particle density on measurement accuracy, and by testing its operational limits. Applications of the device, including measuring changes in the PSSD during a milling process and during cooling crystallization, are presented below.

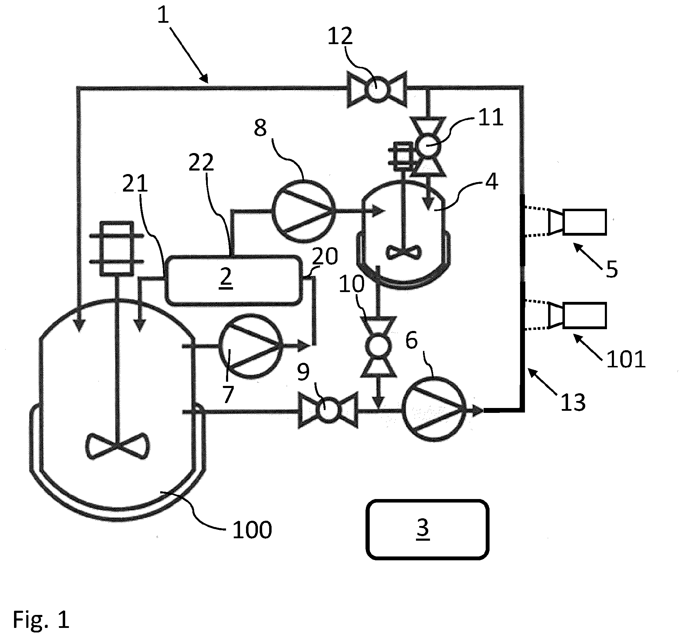

Fig. 1 shows a schematic overview of an embodiment of a device 1 according to the present invention. According thereto, the device 1 comprises a measurement flow path 13 for imaging the sample of the suspension S, wherein the measurement flow path 13 is configured to be brought in flow connection with a main vessel 100 to guide a sample of the suspension residing in the main vessel 100 from the main vessel 100 through the measurement flow path 13 back into the main vessel 100. Furthermore, the device 1 comprises a mixing vessel 4 configured to be brought in flow connection with the main vessel 100 via the measurement flow path 13 to withdraw a sample of the suspension S from the main vessel 100 into the mixing vessel 4, wherein the mixing vessel 4 is configured to be brought in flow connection with the measurement flow path 13 such that a sample of the suspension S residing in the mixing vessel 4 can be guided from the mixing vessel 4 into the measurement flow path 13. Further, the device 1 comprises a cross-flow filter 2 having an inlet 20 and a first and a second outlet 21, 22, the inlet 20 and the first outlet 21 being configured to be brought in flow connection with the main vessel 100 to guide suspension S from the main vessel 100 via the inlet 20 along a filter element 23 of the cross-flow filter 2 back into the main vessel 100 via the first outlet 21, wherein the second outlet 22 is in flow connection with the mixing vessel 4 allowing to draw off clear liquid from the suspension S through the filter element 23 into the mixing vessel 4 to dilute a sample of the suspension S residing in the mixing vessel 4. According to the present invention, the device 1 is configured to withdraw a sample of the suspension S residing in the main vessel 100, and to dilute the sample, particularly when a measure indicative of the particle density in the sample is above a pre-defined threshold.

Particularly, the device 1 operates by first withdrawing a sample from the main vessel 100. Tangential flow filtration, is used to remove particles from the mother liquor to obtain a diluent (i.e., a particle-free stream of mother liquor), which will be referred to as clear liquid. The suspension sample is then mixed with the clear liquid in a dedicated mixing vessel. Finally, characterization can be performed using an optical measurement device such as a stereoscopic imaging device or another suitable measurement device. Based on the measurement results, the sample either undergoes further dilution or returns to the main vessel.

Adding clear liquid from an external source to a sample represents the most straightforward method of dilution. However, such an addition makes returning the sample to the main vessel undesirable, as this would change the vessel's overall composition.

Particularly, the present invention therefore uses liquid obtained from the main vessel itself for dilution, allowing for the recirculation of the sample. Such a closed-loop system minimizes measurement-induced process disturbances and is essential for the monitoring of long-duration batch processes, where the repeated sampling without recirculation would substantially reduce the volume of the suspension. To obtain a clear liquid from a suspension, particles must be removed. Even though no mechanical technique can guarantee the removal of all particles, a liquid can be considered clear and used for dilution if it meets two criteria: First, the clear liquid must not contain any particles large enough to be detected by the measurement tool. Second, the transparency of the liquid is sufficiently high to allow for the imaging of the crystals from the suspension sample.

In the framework of the present invention, it has been found out that these criteria were consistently met when filtering the suspension through a material with a filtration efficiency of 99.9 % for particles of size 4.5 $\mu$m. Particles can be separated from a liquid using filters or hydrocyclones. Filter systems are known in the art that use hydrocyclones as a primary means of particle separation and an in-line filter for the removal of the remainder of small particles. However, hydrocyclones are less suitable for dilution at small scale as they have minimum flow rate requirements. Filters are preferred for small-scale operations due to their simplicity, robustness, and lack of flow rate limitations. However, in-line filters tend to quickly clog when filtering suspensions with high solid weight fractions. Strategies like employing cascades of filters and backflushing have been proposed and tested to allow for semi-continuous operation, yet at industrially relevant particle densities clogging occurs too fast for such systems to be practical. Particularly, the present invention therefore proposes to use tangential flow filtration as it has the advantage of significantly extending operational times without clogging. In tangential flow filtration, the filter cake is continuously eroded by a passing stream of suspension and thus the cake thickness reaches a steady-state, which leads to a constant pressure drop over the filter. In practice, these filters are subject to gradual fouling, which can be reduced by backflushing.

Furthermore, efficient and fast mixing of the clear liquid with the suspension sample is essential to prevent measurement biases. Various strategies have been used in previous dilution concepts for mixing the clear liquid and the stock suspension. The simplest strategy is inline mixing, which can quickly adjust the dilution factor. However, it is constrained by the maximum dilution factor it can provide and representative particle sample withdrawal is difficult to achieve. When a Continuous Stirred-Tank Reactor (CSTR) is used for mixing, achieving homogeneous mixing in the entire dilution system takes time and is reliant on the residence time in the CSTR. Semi-batch mixing, where the clear liquid and the stock suspension are circulated in an inner loop, has been reported in the art but requires precise control over pump speeds.

Particularly, the present invention therefore proposes to use batch dilution, particularly in a stirred mixing vessel to guarantee fast mixing and to prevent particles from settling, thus offering a simple and elegant solution.

Measuring particle density is crucial for dynamically controlling the dilution factor, thus ensuring optimal measurements as the solid weight fraction changes, as is the case during crystallization. While dedicated devices, like turbidity meters, could measure particle density, another approach is to use the particle characterization device (e.g. an imaging system) to estimate particle density.

In a preferred embodiment of the present invention, the device uses as said measurement device a Dual Imaging System for Crystallization Observation, also known as DISCO, as disclosed in A. K.; Schneeberger, J.; Salvatori, F.; Bötschi, S.; Ochsenbein, D. R.; Oswald, M. R.; Pollefeys, M.; Mazzotti, M. A comprehensive shape analysis pipeline for stereoscopic measurements of particulate populations in suspension. Powder Technol. 2017, 321, 479-493. The measurement device can be part of the device or can be an external feature, wherein the device according to the present invention is configured to receive data provided by the measurement device (such as images) for further analysis. Particularly, the measurement device can be configured to acquire detailed information about particles by capturing, using two orthogonally positioned cameras, pairs of stereo images of particles in suspension as they flow through the measurement flow path. The measurement flow path can comprise a transparent portion such as a cell that allows imaging of the suspension sample therein. Enhanced contrast between the particles and the background can be achieved by backlighting the flow cell with telecentric green LEDs. Particle contours can be extracted through adaptive background subtraction and binary thresholding. Contours from the different cameras are subsequently matched to obtain a contour pair for each particle. The particles are categorized to exclude agglomerates and air bubbles before the contour pairs are used for characterization. Low particle density is required to obtain a set of contour pairs for every particle, as shown in Fig. 2.

Populations of particles can be described using a particle size and shape distribution (PSSD). To obtain a PSSD, the actual particle shape, which is distinct for every particle, needs to be idealized by assuming a generic particle shape. Depending on the exhibited crystal habit of a compound, different generic particle shapes, such as cylinders or cuboids can be used. In an example of the present invention, the compounds used exhibit a needle-like morphology, so that the true crystal shape can be approximated using a cylinder with two characteristic lengths, i.e., length, $L_1$, and width, $L_2$. To

facilitate comparisons between PSSDs, averaged characteristics of the populations are often used. Particularly, the main metrics used to compare populations are the volume-weighted mean length, $L_{1,v}$, the width, $L_{2,v}$, and the average aspect ratio, $\theta$, defined as the ratio of the former to the latter. Further details can be found below.

Furthermore, particularly, the particle density of a suspension can be evaluated from images using different metrics. Here, the particle density is measured by acquiring 20 pairs of images, which are used to evaluate the pixel intensity and the contour count per image. The average grayscale pixel intensity of an image ranges from 0 (completely black) to 255 (completely white). This metric is calibrated to have a value of 110 when the flow cell is filled with pure ethanol. Pixel intensity has a negative, non-linear, monotonic correlation with the particle density. It requires calibration and can shift during an experiment due to fouling or changes in the transparency of the liquid, thus reducing the robustness of particle density estimation at low particle densities. The second metric, contour count per image, is the average number of contours in a set of images. It exhibits a positive, linear correlation with particle density at low solid weight fractions. However, as this fraction increases, the likelihood of particles overlapping, and thus merging into fewer contours, increases. As a result, the contour count increasingly deviates from the particle count as shown in Fig. 2, and can even decrease, as it will be seen further down below.

Consequently, the two metrics complement each other to estimate particle density over a wide range of solid weight fractions. According to a preferred embodiment of the device and method according to the present invention, the pixel intensity is first used to determine the order of magnitude of the particle density. If the intensity exceeds a threshold value of 90, the contour count is used for a more accurate estimate of the particle density.

In summary, particularly, the design of the device /dilution system according to the present invention leverages tangential flow filtration, batch mixing for effective sample preparation, particularly a stereoscopic imaging device for particle characterization and density measurement, and particularly a closed-loop system for minimal process disturbance.

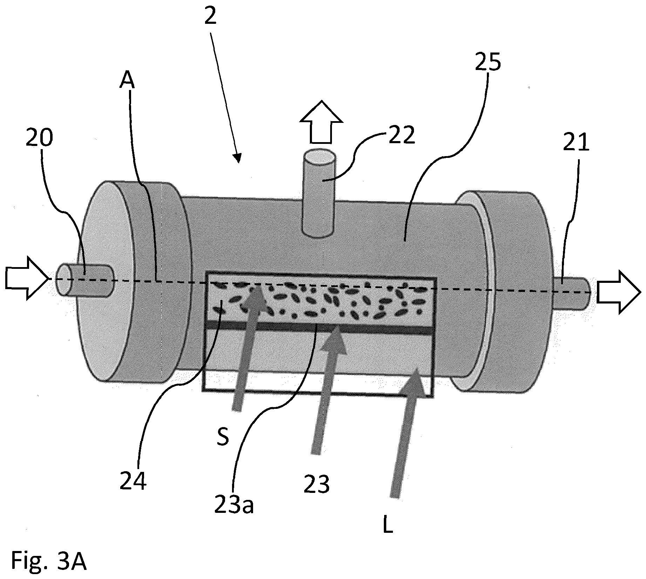

As indicated in Fig. 1 in conjunction with Figs. 1, 3A, 3B and 4A to 4E, the device 1 operates according to the following working principle in a preferred embodiment of the present invention. The device 1 comprises a cross-flow filter 2 which is also denoted as tangential flow filter, three pumps 6, 7, 8, four valves 9, 10, 11, 12, a mixing vessel 4, and a controlling unit 3, e.g. a microcontroller such as ARDUINO Uno Rev3 that communicates with a computer (e.g. a laptop) running an image processing and control software (particularly in Matlab and C++). A (second) pump 7 (e.g. a peristaltic pump, e.g. Ismatec, Wertheim, Germany) continuously recirculates the suspension S from the main vessel 100 through the cross-flow filter 2 at a flow rate of approximately 1 L min$^{-1}$. A (second) dosing pump 8, preferably operating at a lower flow rate, withdraws clear liquid L from the cross-flow filter 2. An illustration of a preferred embodiment of the cross-flow filter is shown in Fig 3A. The cross-flow filter 2 comprises a filter element 23 (e.g. 316L Stainless steel, Poral, Le-Pont-de-Claix, France) in form of a hollow cylinder with a surface area of approximately 94 cm$^2$ and a wall thickness of 3.5 mm. Particularly, the cross-flow filter 2 comprises a housing 25 extending in an axial direction A, wherein the inlet 20 and the first outlet 21 are arranged opposite to one another in the axial direction A so that suspension S can be passed from the inlet 20 to the first outlet 21 in the axial direction A, wherein the housing 25 delimits an internal space, wherein the filter element 23 is arranged in the internal space and comprises a circumferential wall 23a surrounding a passageway 24 allowing suspension S to flow from the inlet 20 to the first outlet 21 through said passageway 24, wherein the circumferential wall 23a is permeable to the liquid of the suspension S, such that clear liquid L can be withdrawn through the circumferential wall 23a via the second outlet 22, particularly in a flow direction running orthogonal to the flow direction of the suspension S in said passageway 24.

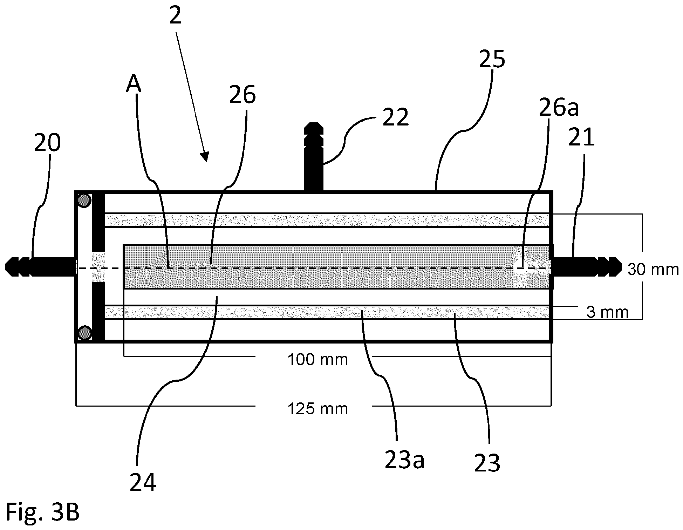

Fig. 3B shows a further preferred embodiment of the cross-flow filter 2. According thereto, in addition to the components shown in Fig. 3A, the cross-flow filter 2 can comprise a body 26, e.g. an elongated cylindrical body, that is inserted into the passageway 24 of the filter element 23 of the cross-flow filter 2 to reduce a volume of the passageway 24 and to increase the liquid velocity of the suspension S flowing from the inlet 20 to the first outlet 21. Particularly, the body 26 can comprise one or several openings 26a for establishing a flow connection between the passage way 24 and the first outlet 21.

Furthermore, Fig. 3B indicates possible dimensions of the cross-flow filter 2 in an exemplary fashion.

Furthermore, the mixing vessel preferably comprises a volume of about 200 mL and particularly is a stirred mixing vessel using an impeller with a diameter of about 33 mm driven by an overhead stirrer. Furthermore, the mixing vessel 4 can comprise a liquid level sensor to stop the addition of clear liquid whenever the mixing vessel 4 is full. The suspension S is circulated through the imaging device 101 using a (e.g. peristaltic) first pump 6. Particularly, the device 1 (excluding the mixing vessel 4 and the cross-flow filter 2) can have a volume of roughly 50 mL.

The operation of the device 1 can comprise five distinct phases according to a preferred embodiment illustrated in Fig., 4A to 4E, which comprises the same configuration as shown in Fig. 1. A measurement cycle is defined as the sequence of steps required to go from the initial measurement of the particle density to the PSSD measurement, followed by the ejection of the suspension. Such a cycle may include multiple rounds of dilution, particle density measurement, and ejection.

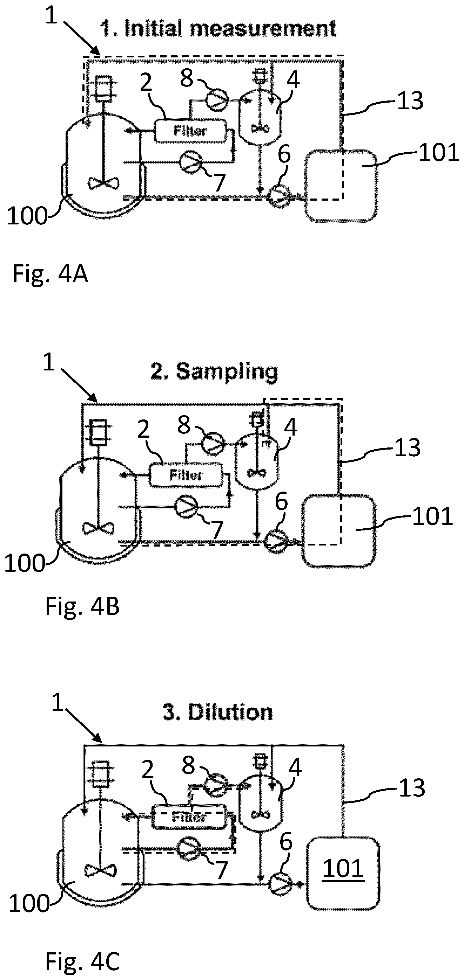

The measurement procedure can start with an initial measurement (phase 1) as illustrated in Fig. 4A, wherein a suspension sample is withdrawn from the main vessel 100 and passed through the measurement flow path 13 to perform an initial particle density measurement. If the measured particle density is within the acceptable limits, the measurement of the PSSD, particularly via the acquisition of 2000 image pairs, can begin immediately. If the average pixel intensity is below the threshold value of 90 or if the number of contours per image exceeds 30, dilution is initiated

Dilution starts by transferring a sample of the suspension to a stirred mixing vessel 4 (phase 2), as visualized in Fig. 4B. Clear liquid from the suspension of the main vessel 100 is then added from the cross-flow filter 2 using a dosing pump 8 until the liquid level indicator confirms that the mixing vessel 4 is full (phase 3).

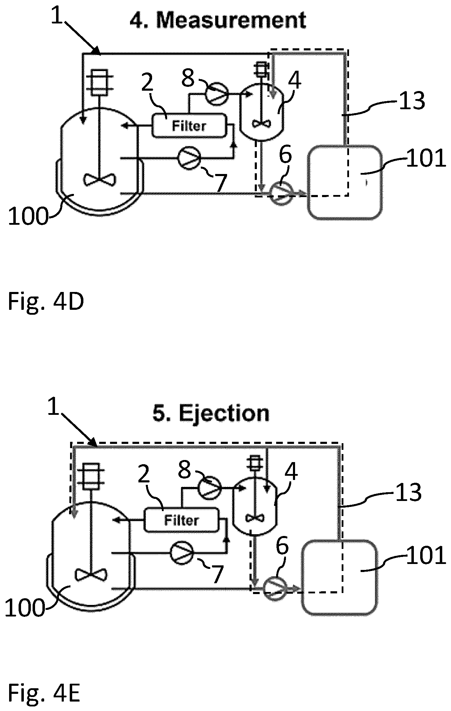

After dilution, the particle density of the suspension S within the mixing vessel 4 is measured by circulating the suspension S in an internal loop through the measurement flow path 13 as shown in Fig. 4D (phase 4). A threshold value of 30 contours per image is set, below which particle characterization is initiated. If the density remains too high for effective PSSD measurement, a sequence of partial ejection of the diluted suspension back to the main vessel 100 (cf. Fig. 4E) and further dilution using additional clear liquid (cf. Fig. 4C) ensues (phase 5). According to a preferred embodiment of the present invention, the time, $t_{ejection}$, during which liquid is returned (partial ejection) to the main vessel ([s]) is defined as:

$$t_{ejection} = \tau \, f_{max} \quad \text{for} \quad \hat{x} \leq 90,$$

and

$$t_{ejection} = \tau \left(1 - \frac{y_{target}}{\hat{y}}\right) \quad \text{for} \quad \hat{x} > 90 \qquad (1)$$

where $\tau$ is the residence time of said inner loop ([s]) which comprises the measurement flow path 13 and its flow connections to the mixing vessel 4. The maximum fraction of the inner loop that can be ejected whilst still ensuring that the sample remains representative, $f_{max}$, has a value of 0.95 according to a preferred embodiment of the present invention. The observed average pixel intensity, $\hat{x}$, is used to determine if the suspension S is diluted enough to use the observed contour count per image $\hat{y}$ to proportionally control the dilution. The target contour count per image $y_{target}$ is generally set to 20 according to a preferred embodiment of the present invention.

The number of contours per image decreases by less than the chosen factor of dilution due to particle overlap. The average number of contours per image is equal or smaller than the number of particles in the observed volume, with the difference between these values reducing as the particle density decreases. Particularly, to ensure efficient dilution with a minimal number of steps, a threshold value of 30 contours per image can be used, below which the PSSD measurement is initiated, in combination with the targeted average number of contours per image, $y_{target}$, being 10 as an example.

Examples of the present invention

A series of experiments have been performed to assess the capabilities and limitations of the dilution device 1 according to the present invention. In the first experiment (Example 1), the device was used to monitor the PSSD of a suspension over 24 hours. The second experiment (Example 2) investigated the impact of particle density on the measurement accuracy. Subsequent experiments involved incremental increases in the solid weight fraction (Example 3) and repeated wet milling steps (Example 4). In the final experiment, the device was used to track crystal growth during cooling crystallization (Example 5).

Details about the experimental protocols can be found further down below.

Example 1: Reliable and consistent dilution over an extended period of operation

To evaluate the long-term operational stability and the ability to dilute consistently, a suspension with a solid weight fraction of 8% was continuously monitored over a 24-hour period. In total, 178 measurement cycles were performed with the PSSD being measured at the end of each one by collecting 2000 image pairs.

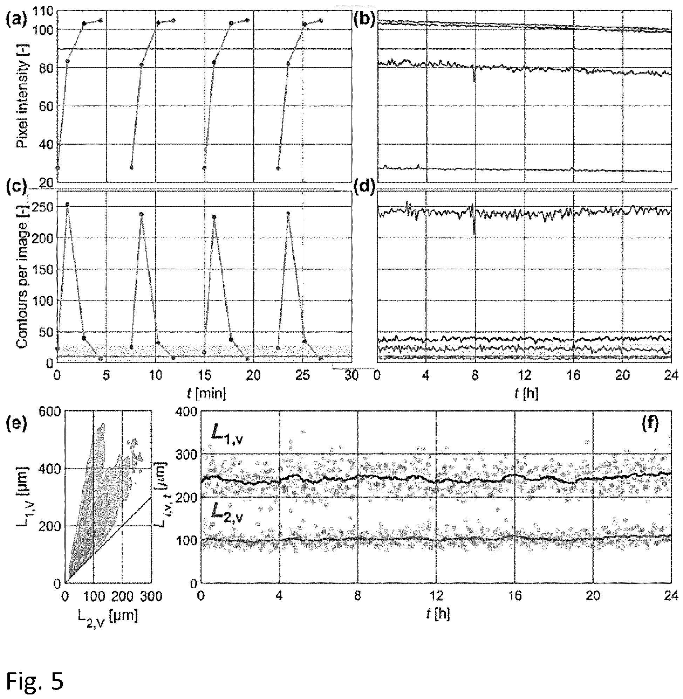

To ensure continuous operation, preventive maintenance was conducted by replacing the tubing in the peristaltic pump after roughly 18 hours of use, given its lifespan of 20 hours. The results are illustrated in Fig. 5. Panel (a) and (b) show the evolution of the pixel intensity over time, with Panel (a) focusing on the first few measurement cycles. The transition from the initial undiluted state to progressively diluted states is marked with dots that progressively turn brighter. The PSSD measurement is initiated when the desired suspension density is reached. The horizontal dashed line at a pixel intensity of 90 indicates the threshold value from Equation (1), above which the particle density estimation is performed using the number of contours per image. Panel (b) shows the pixel intensity after a set number of dilutions in time. For one measurement cycle after approximately 5 hours, only two dilutions were required, whereas all other measurement cycles required three dilutions. There is a slow decrease in the image intensity throughout the experiment. This is likely due to the leaching of copper from the brass mixing vessel into the aqueous solution, which was corroborated by the observed blue color of the mother liquor at the end of the experiment. Future versions of the dilution device will not contain any component made of brass.

Panels (c) and (d) show the evolution of the contour count per image, with Panel (c) focusing on the first few measurement cycles. The line, set at 20 contours per image, represents the target density. The gray-shaded area marks the acceptable range for initiating a PSSD measurement, with an upper limit of 30 contours per image. Panel (c) also visualizes the non-monotonic correlation between contour count and particle density, as the second particle density measurement exhibits a higher value than the initial one, even though the first dilution reduced the particle density by a factor of approximately 20.

Panel (e) shows a 2D contour plot of the PSSD obtained from merging all measurements, with different contour areas enclosing 90%, 50%, and 10% of the total particle volume. The distribution corresponds to an ensemble of elongated particles with an average aspect ratio of 2.3.

Panel (f) shows the time evolution of volume-weighted mean average length, $L_{1,v}$, and width, $L_{2,v}$, with individual measurements shown as transparent dots and moving means as solid lines. No significant change in the PSSD was observed over time, indicating that no measurable mechanical abrasion or other forms of breakage occurred.

These observations confirm the reliability and consistency of the dilution device in performing PSSD measurements over extended periods without affecting the PSSD itself.

Example 2: Effect of particle density on measurement accuracy

The impact of particle density on the accuracy of PSSD measurements when using imaging devices has been previously studied to a limited extent using manual dilution and simulations.

To quantify the impact of particle density on measurement accuracy, three different crystal populations exhibiting different sizes and shapes were characterized at different particle densities.

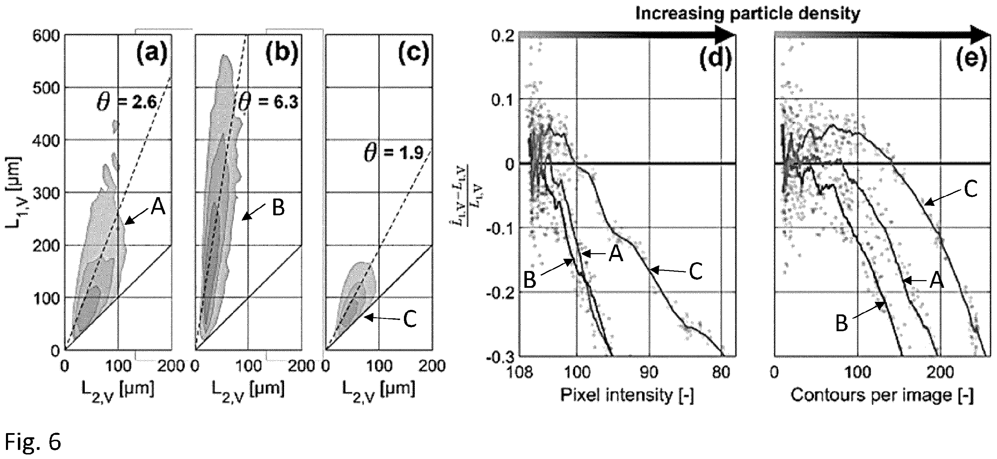

Two-dimensional contour representations of the PSSDs of Populations A, B, and C are shown in Panels (a), (b), and (c) of Fig. 6, respectively. Population A features a broad particle size distribution with a relatively low aspect ratio. The average particle size of Population B is very similar to Population A. However, the aspect ratio of the particles is significantly higher. Population C contains significantly smaller particles than the other two populations. Therefore, differences in the results between Populations A and B can likely be attributed to the different particle shapes, whilst differences between Populations A and C can likely be attributed to the differences in average particle size.

The relative measurement errors in the volume-weighted characteristic length $L_{1,v}$ are shown in Panels (d) and (e) of Fig. 6. These errors were determined by comparing automated PSSD measurements at various particle densities against a benchmark PSSD measurement conducted at a particle density of approximately 10 contours per image. Individual measurements are represented using transparent dots, with a solid line representing moving means. As particle density increases, the variance in PSSD measurement decreases, reflecting the diminishing influence of stochastic variations as the number of particles being characterized per measurement increases.

For all measurement metrics and populations, the average particle length is increasingly underestimated as particle density increases. The pixel intensity and contour per image thresholds beyond which the error monotonically increases are different for the three populations. For the two populations with relatively large average particle sizes, Population A and B, the relative measurement error increases at similar rates with respect to both particle density metrics. Populations A and B exhibit unbiased measurements at low particle densities, whereas the average particle length of Population C is slightly overestimated at intermediate densities. The mean average length of population C is 104 $\mu$m, consequently a 5 % measurement error corresponds to a rather insignificant absolute error. Populations A and B, which contain larger particles, do not exhibit size overestimation at any particle density. The threshold beyond which the measurement error becomes significant for the contours per image is lower for Population B compared to Population A, likely due to the higher average aspect ratio, and consequently higher probability of particles overlapping. This effect of shape is not observed for the pixel intensity.

The findings about increasing measurement error at higher particle density are consistent with previous studies that indicate measurement errors increase with higher suspension densities.

The sensitivity of the pixel intensity value to the particle density is very high at low particle densities. This, in combination with the narrow range in which measurement errors are negligible (above 105), makes the pixel intensity difficult to use to effectively control the dilution behavior.

Consequently, the contours per image are used to control the dilution device in this work. In conclusion, contour counts below 30 induce minimal measurement error, and counts up to 50 per image are usable for populations with large and relatively compact particles. These insights enhance the understanding of the relationship between particle density and measurement accuracy, providing guidance for the operation of the dilution device under different conditions.

Example 3: Adaptation to changes in solid weight fraction

The operating limits of the dilution device concerning solid fraction were assessed and its capability to automatically adapt to changes in particle density was demonstrated. This was done by monitoring the PSSD of a suspension with an initially low particle density that required no dilution. The solid weight fraction was then incrementally increased by 2% every 30 min until a final value of 30% was achieved.

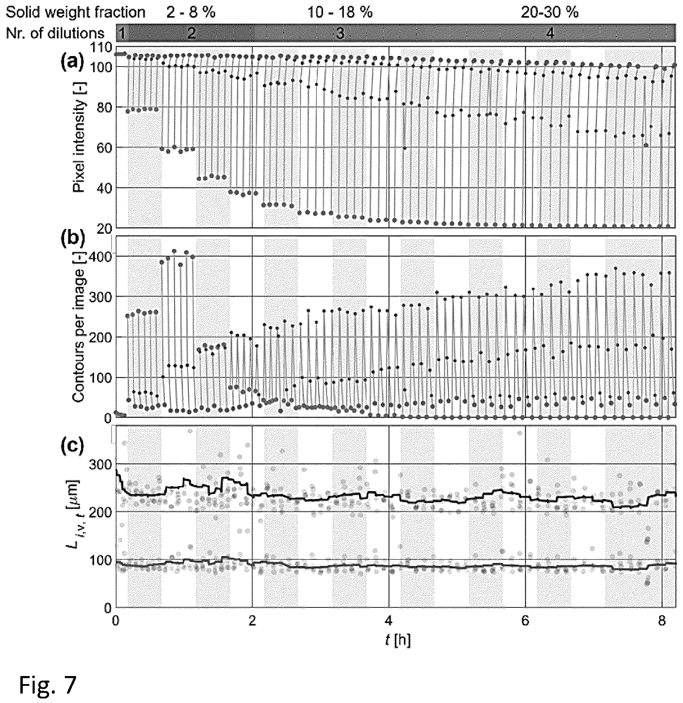

Throughout this experiment, the performance of the device was recorded, with the results shown in Fig. 7. Panels (a) and (b) shows the progression of pixel intensity and contour counts per image, respectively.

Each solid addition resulted in a noticeable drop in the pixel intensity of the undiluted suspension sample, with the magnitude of the drop diminishing over time. Beyond four hours, corresponding to a solid fraction of 18 %, changes in initial pixel intensity become minimal due to the images being highly crowded and nearly black.

The pixel intensity after the first and the second dilutions in each cycle continued to decrease as the experiment progressed. At a solid weight fraction of 2%, two dilution steps were necessary. At 8% and 18%, three and four dilution steps were required for the first time, respectively, as highlighted by the bar at the top in Fig. 7. Similar trends were observed for the contour count per image, which peaked for the undiluted suspension at a solid weight fraction of 4% before dropping to single-digit values at 16%, due to particle crowding that hindered accurate contour identification.

Nevertheless, despite the differences in the dilution metrics and the number of steps necessary, the suspension was always diluted and the final contours per image were within the range of acceptable values for accurate characterization.

Panel (c) displays the time evolution of the volume-weighted mean average length, $L_{1,v}$, and width, $L_{2,v}$. Initially, a slight decrease in the mean length can be observed. This is likely due to the small initial sample not being representative of the bulk powder or due to partial dissolution in a not fully saturated mother liquor. As the solid fraction increased to 2% and beyond, no significant change in the PSSD was detected, thus confirming the robustness of the dilution device in maintaining consistent measurement quality for varying solid densities.

This experiment effectively demonstrated the ability of the dilution device to automatically adjust to changing particle densities and to operate efficiently even for suspensions having very high solid weight fractions of up to 30%.

Example 4: Adaptation to rapid changes in particle density and PSSD

The capability of the dilution device to operate during, to detect, and to adapt to rapid changes of the PSSD of a suspension was tested by monitoring a suspension with a solid weight fraction of 6% whilst it underwent four milling steps.

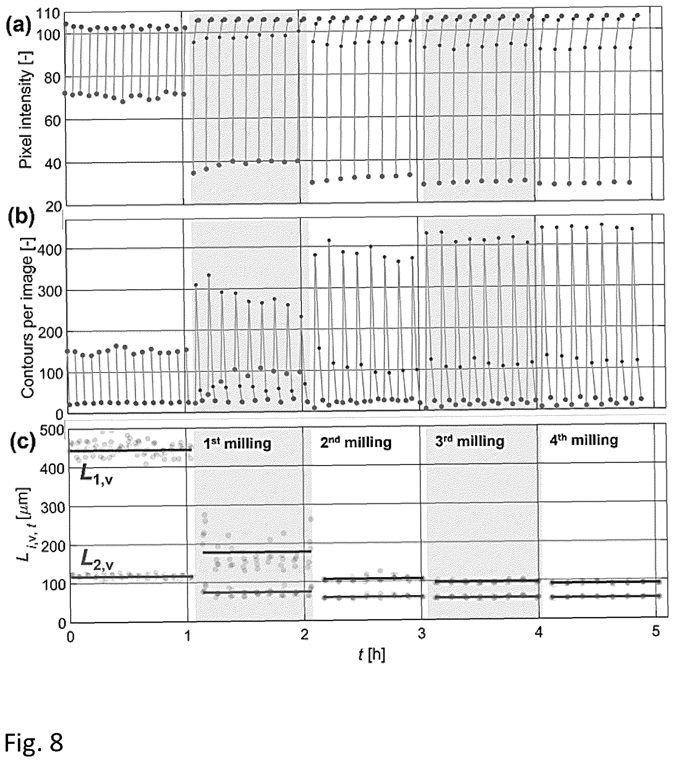

The results are presented in Fig. 8 with Panels (a) and (b) showing the evolution of the pixel intensity and the contour count per image, respectively. Notable changes in the dilution pattern can be observed particularly after the first milling step. Each subsequent milling operation leads to a decrease in pixel intensity. This can be explained by the increasing cross-sectional area per unit of mass as the average particle size decreases, which leads to the particle contours occupying a larger fraction of pixels.

Panel (c) shows the time evolution of the volume-weighted mean particle length, $L_{1,v}$, and width, $L_{2,v}$. The horizontal lines show the average particle size during the intervals between milling steps. These PSSD measurements offer quantifiable insights into the changes in particle dimensions. Notably, after the second milling operation, further milling had minimal effect on the PSSD, suggesting that a critical particle size threshold had already been reached beyond which milling at the same intensity produced diminishing returns. These findings align with previous studies on wet milling.

This experiment demonstrated the ability of the dilution device to adjust to rapid changes in particle size and density. Such capabilities are essential for applications in industry where particle size manipulation is routine and changes to the PSSD during crystallization can be large and fast.

Example 5: Tracking crystal growth during cooling crystallization

An exemplary application of the dilution device is demonstrated by tracking the real-time evolution of the PSSD during controlled cooling crystallization. Whilst such a capability is critical for potential application under industrial conditions, a supersaturated liquid with rapid crystal growth presents a challenging environment for dilution systems.

The dilution device was used to monitor a saturated aqueous solution of γ D-mannitol (GDM) containing seeds. After 1 hour, the suspension was gradually cooled for 5 hours, thus resulting in an approximate 8% increase in the solid weight fraction in the suspension. Throughout the experiment, the measurement device efficiently adjusted to the increasing solid concentration caused by crystallization, thus providing optimal imaging conditions for the PSSD measurement.

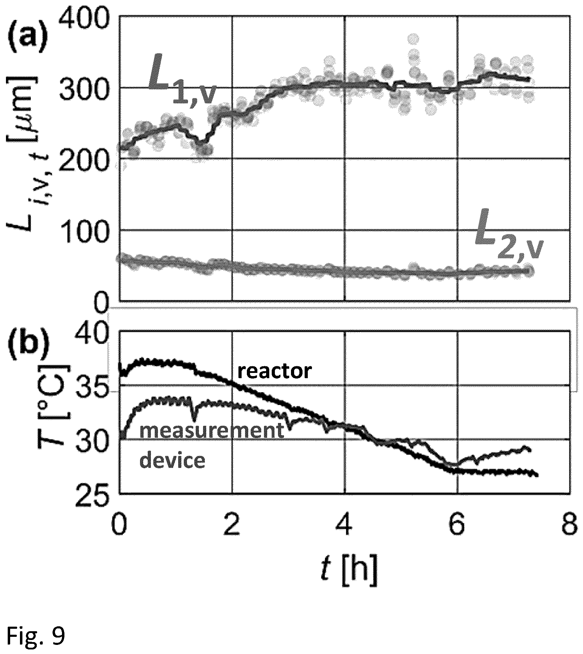

The results of the crystallization experiment are presented in Fig. 9, which shows the evolution of the volume-weighted mean characteristic lengths over time.

During the experiment, the average particle length, $L_{1,v}$, significantly increased, while the width, $L_{2,v}$, did not increase to the same extent. Consequently, the aspect ratio of the final product was significantly higher than that of the initial seeds.

This experiment demonstrates the effectiveness of the device according to the present invention to dilute and thus to enable the measurement of dense suspensions, particularly during rapid crystal growth.

The device according to the present invention allows to accurately and robustly dilute dense suspensions, thus enabling real-time characterization of particles in suspension with high solid weight fractions using optical imaging systems. By leveraging tangential flow filtration, the device facilitates the PSSD measurement of suspensions with solid densities comparable to those encountered in industrial crystallization processes.

The key advantages of the present invention can be summarized as follows:

The device's robustness was demonstrated through the continuous monitoring of a suspension for 24 hours. This, in combination with its ability to automatically adapt to changing particle densities and to operate at solid weight fractions of 30%, indicates that there is a broad range of potential applications.

The device was used to assess the impact of particle density on the accuracy of PSSD measurements. The investigation included particles of various sizes and shapes, yielding results consistent with previous studies and providing insights into its optimal operation.

The device effectively monitored the evolution of the PSSD during a cooling crystallization process, thus showcasing its capability to operate and to enable particle characterization under realistic process conditions.

According to certain embodiments of the present invention, the device can be further improved. First, the tangential flow filter may experience fouling under supersaturated conditions. Although this can be managed by manually replacing the filter, which takes less than a minute, the device can comprise a filter regeneration function. This can involve the use of a second filter to allow for cyclical back-flushing or a system for purging the filter with fresh solvent. Second, the level sensor can become fouled, requiring manual cleaning of the float. This issue can be mitigated by incorporating an automated rinsing mechanism. Third, although the device is insulated, it may not be temperature-controlled. This can lead to temperature differences between the device and the main vessel, potentially impacting cooling crystallization processes. Adding heating pads or using a jacketed mixing vessel can address this limitation.

In the case of the pharmaceutical industry, the limited availability of expensive APIs can also make process development challenging. These challenges underscore the importance of developing better process development strategies. Real-time monitoring of the solid phase during crystallization could significantly contribute to these improvements by facilitating experimental validation of new crystallization theories, driving further advancements in process modeling and development. Process control to reach a target product PSSD has already been successfully demonstrated at low solid weight fractions and could now potentially be used under conditions similar to industrial processes.

In the above, all Examples, except for the cooling crystallization of Example 5, are conducted using suspensions of β L-glutamic acid (BLGA) (Sigma-Aldrich, ReagentPlus®, ≥ 99% (HPLC),450 Switzerland). The suspensions were prepared with technical grade ethanol for the 24 hours monitoring of Example 1 and with saturated, deionized, and microfiltered water sourced from a Milli-Q Advantage A10 (Millipore, Zug, Switzerland) for the remaining Examples. The cooling crystallization of Example 5 was performed using γ D-mannitol (GDM) (Sigma-Aldrich, ≥ 98%, Switzerland) and water.

The main crystallization vessel is a 2 L jacketed glass vessel (LaboTechSystems LTS, 457 Reinach, Switzerland) featuring a four-blade glass impeller (LaboTechSystems LTS AG, Reinach, Switzerland) with a 60 mm diameter and 45∘ angled blades, driven by an overhead stirrer (Eurostar digital, IKA-Werke GmbH & Co. KG, Staufen, Germany). An oil bath (Huber Pilot ONE,460 Offenburg, Germany) ensures precise temperature control over the main vessel.

In Example 1, the suspension for the 24 hours monitoring was prepared by suspending 128 g of BLGA as received from the supplier in 1600 g of ethanol.

In Example 2, the initial suspensions with high particle density for Population A, B, and C were prepared by mixing 120, 80, and 100 g of BLGA powder respectively with 2000 g of a saturated aqueous solution. These initial suspensions with a high particle density were incrementally diluted by a factor of 2 with PSSD measurements performed between every dilution step.

Population A is the BLGA powder as received from the supplier. Population B consists of BLGA that was recrystallized in water using seeded cooling crystallization. Population C is ground BLGA that was sieved through a mesh size of 100 μm to remove large particles.

In Example 3, the initial suspension with low particle density, which allowed for PSSD measurements without any dilution, was created by suspending 1 g of BLGA in 2000 g of a saturated aqueous solution. Subsequently, the solid weight fraction was increased after 10 min by adding 39 g of BLGA to raise the solid weight fraction to 2%. The solid weight fraction was increased 14 more times by adding 40 g of BLGA at an interval of 30 min. After reaching a final solid to liquid weight fraction of 30%, the system was monitored for an additional 60 min before the experiment was terminated.

In Example 4, the experiment was started by suspending 120 g of large BLGA seeds in 2000 g of a saturated aqueous solution. A total of four distinct milling operations were conducted at an interval of approximately 60 min. Milling was performed using a rotor-stator wet mill (MagicLab, module DR, generators 2G-4M-6F, IKA-Werke GmbH & Co. KG, Staufen, Germany), which was operated at 16 000 rpm. The suspension was circulated through the mill for 4 min at a flow rate of 1 L min$^{-1}$ using a peristaltic pump (Ismatec, Wertheim, Germany).

In Example 5, the cooling crystallization was prepared by dissolving 111 g of GDM in 1200 g water at 40 ∘C. This solution was subsequently cooled to 37 ∘C before starting the experiment by adding 10 g of seed crystals. After maintaining a constant temperature for approximately 60 min, cooling was initiated at a rate of 2 K h$^{-1}$ for 5 hours. Cooling a saturated aqueous solution of GDM from 37 ∘C to 27 C.

The characteristics used to compare different particle size and shape distributions (PSSDs) are derived from the moments of the distribution and can be found in Table 1. The moment $\mu_{ij}$ of a needle-like PSSD [$\mu$m$^{i+j}$kg$^{-1}$$_{sol}$] is given by:

$$\mu_{ij}(t)=\int_0^\infty \int_0^\infty f(L_1,L_2,t)L_1^i L_2^j dL_1 \, dL_2$$

where f represents the number density function of the PSSD [$\mu$m$^{-2}$kg$^{-1}$$_{sol}$]. The indices i and j stand for the order of the moment with regards to the characteristic lengths $L_1$ and $L_2$ respectively.

Table 1: Characteristics used to compare populations of needle-like particles.

| Characteristics of a PSSD | Definition |
|---|---|
| $L_{1,v}$ [$\mu$m] | $\mu_{22}/\mu_{12}$ |
| $L_{2,v}$ [$\mu$m] | $\mu_{13}/\mu_{12}$ |
| $\theta$ [-] | $\mu_{22}/\mu_{13}$ |

**Claims**

1. A device (1) for reducing the particle density of a sample of a suspension of particles in a liquid, comprising:

   - a measurement flow path (13) for measuring the sample of the suspension, wherein the measurement flow path (13) is configured to be brought in flow connection with a main vessel (100) to guide a sample of the suspension residing in the main vessel (100) from the main vessel (100) through the measurement flow path (13) back into the main vessel (100),
   - a mixing vessel (4) configured to be brought in flow connection with the main vessel (100) via the measurement flow path (13) to withdraw a sample of the suspension from the main vessel (100) into the mixing vessel (4), and wherein the mixing vessel (4) is configured to be brought in flow connection with the measurement flow path (13) such that a sample of the suspension residing in the mixing vessel (4) can be guided from the mixing vessel (4) into the measurement flow path (13), and
   - a cross-flow filter (2) allowing to draw off clear liquid from the suspension from the main vessel (100) into the mixing vessel (4) to dilute a sample of the suspension residing in the mixing vessel (4),

   wherein
   the device (1) is configured to withdraw a sample of the suspension residing in the main vessel (100), and to dilute the sample.

2. The device according to claim 1, wherein the device (1) is configured to withdraw the sample of the suspension residing in the main vessel (100), and to dilute the sample when a measure indicative of the particle density in the sample is above a pre-defined threshold.

3. The device according to claim 2, wherein the device (1) comprises a measurement device, particularly a camera, to acquire measurement data for determining said measure, or wherein the device (1) is configured to receive measurement data for determining said measure, particularly images, from an external measurement device, particularly an external camera.

4. The device according to one of the preceding claims, wherein the device (1) is configured to dilute a sample of the suspension in the measurement flow path (13) by emptying the sample into the mixing vessel (4) and by pumping clear liquid from the second outlet of the cross-flow filter (2) into the mixing vessel (4).

5. The device according to claim 4, wherein the device (1) is configured to further dilute the sample by returning a portion of the sample in the measurement flow path (13) to the main vessel (100), by emptying a remaining portion of the sample into the mixing vessel (4), and by pumping clear liquid from the second outlet of the cross-flow filter (2) into the mixing vessel (4).

6. The device according to claim 5, wherein the device (1) comprises a controlling unit configured to determine said portion of the sample to be returned into the main vessel (100), wherein particularly a desired number of contours per image serves as setpoint of the controlling unit, wherein particularly the controlling unit is a proportional control unit.

7. The device according to one of the preceding claims, wherein the device (1) comprises a first pump (7) configured to continuously pump suspension from the main vessel (100) through the cross-flow filter (2) back into the main vessel (100).

8. The device according to one of the preceding claims, wherein the device (1) comprises a second pump (8) configured to withdraw and dose clear liquid from the cross-flow filter (2) into the mixing vessel (4).

9. The device according to one of the preceding claims, wherein the device (1) comprises a third pump (6) configured to pump suspension from the main vessel (100) into the measurement flow path (13).

10. The device according to one of the preceding claims, wherein the device (1) comprises a first valve (9) configured to connect the main vessel (100) to the measurement flow path (13), particularly via the third pump (6), and/or wherein the device (1) comprises a second valve (10) connecting the mixing vessel (4) to the third pump (6) upstream the first valve (9), and/or wherein the device (1) comprises a third valve (11) connecting the measurement flow path (13) to the mixing vessel (4), and/or wherein the device (1) comprise a fourth valve (12) configured to connect the measurement flow path (13) to the main vessel (100).

11. The device according to one of the preceding claims, wherein the cross-flow filter (2) comprises an inlet (20) and a first and a second outlet (21, 22), the inlet (20) and the first outlet (21) being configured to be brought in flow connection with the main vessel (100) to guide suspension from the main vessel (100) via the inlet (20) along a filter element (23) of the cross-flow filter (2) back into the main vessel (100) via the first outlet (21), wherein the second outlet (22) is in flow connection with the mixing vessel (4) allowing to draw off clear liquid from the suspension through the filter element (23) into the mixing vessel (4) to dilute a sample of the suspension residing in the mixing vessel (4).

12. The device according to claim 11, wherein the cross-flow filter (2) comprises a housing (25) extending in an axial direction (A), wherein the inlet (20) and the first outlet (21) are arranged opposite to one another in the axial direction (A) so that suspension can be passed from the inlet to the first outlet in the axial direction (A), wherein the housing (25) delimits an internal space, wherein the filter element (23) is arranged in the internal space and comprises a circumferential wall (23a) defining a passageway (24) allowing suspension (S) to flow from the inlet (20) to the first outlet (21) through said passageway (24), wherein the circumferential wall (23a) is permeable to the liquid (L) of the suspension (S), such that clear liquid (L) can be withdrawn through the circumferential wall (23a) via the second outlet (22), particularly in a flow direction running orthogonal to the flow direction of the suspension (S) in said passageway (24).

13. The device according to one of the preceding claims, wherein a body (26) is inserted into a passageway (24) of a filter element (23) of the cross-flow filter to reduce a volume of the passageway (24).

14. A method for reducing a particle density of a sample of a suspension of particles in a liquid, the method comprising the steps of:

- withdrawing a sample of a suspension residing in a main vessel (100), passing the sample through a measurement flow path (13), acquiring first measurement data from the sample in the measurement flow path (13) and estimating a measure indicative of the particle density of the sample by analyzing said first measurement data, and
- if the measure is above a pre-defined threshold, the sample is diluted, otherwise second measurement data is acquired from the sample in the measurement flow path (13) and the PSSD of the sample is determined by analyzing said second measurement data, wherein diluting the sample comprises transferring a sample of the suspension from the main vessel (100) into a mixing vessel (4) and dosing clear liquid from the main vessel (100) filtered by a cross-flow filter (2) into the mixing vessel (4).

**15.** The method according to claim 14, wherein after diluting the sample, the sample is circulated from the mixing vessel (4) through the measurement flow path (13) and third measurement data is acquired from the sample in the measurement flow path (13) and a measure indicative of the particle density of the sample is estimated by analyzing said third measurement data, wherein in case the measure is below a pre-defined threshold, fourth measurement data is acquired from the sample in the measurement flow path (13) and the PSSD of the sample is determined by analyzing said fourth measurement data, otherwise a sequence of partial ejection of the diluted suspension from the mixing vessel (4) back to the main vessel (100) and further dilution comprising dosing clear liquid from the main vessel (100) filtered by a cross-flow filter (2) into the mixing vessel (4) is conducted.

Fig. 1

Fig. 2

Fig. 3A

Fig. 3B

Fig. 4A

Fig. 4B

Fig. 4C

Fig. 4D

Fig. 4E

Fig. 5

Fig. 6

EP 4 703 704 A1

Fig. 7

Fig. 8

Fig. 9

Europäisches
Patentamt

European
Patent Office

Office européen
des brevets

# EUROPEAN SEARCH REPORT

**Application Number**

EP 24 19 7637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SCHORSCH STEFAN ET AL: "Measuring multidimensional particle size distributions during crystallization", CHEMICAL ENGINEERING SCIENCE, vol. 77, 1 July 2012 (2012-07-01), pages 130-142, XP093243229, GB ISSN: 0009-2509, DOI: 10.1016/j.ces.2011.11.029 Retrieved from the Internet: URL:https://pdf.sciencedirectassets.com/271348/1-s2.0-S0009250912X00083/1-s2.0-S0009250911008281/main.pdf?hash=eaf80e443e77ce4776167618317719197983 7019017f3478443e1df3cd00c0d1&host=68042c943591013ac2b2430a89b270f6af2c76d8dfd086a07176afe7c76c2c61&pii=S0009250911008281&tid=spdf-e205fd8a-2f75-443a-b452-2e7> * figure 1 * * paragraph [0002] - paragraph [0003] * ----- | 1-15 | INV. G01N1/38 G01N15/0227 G01N15/075 |
| A | JP 2003 254960 A (FUJI ELECTRIC CO LTD) 10 September 2003 (2003-09-10) * paragraph [0016] * ----- | 1-15 | TECHNICAL FIELDS SEARCHED (IPC)<br><br>G01N |

The present search report has been drawn up for all claims

| Place of search | Date of completion of the search | Examiner |
|---|---|---|
| The Hague | 28 January 2025 | Rasmusson, Marcus |

EPO FORM 1503 03.82 (P04C01)

## ANNEX TO THE EUROPEAN SEARCH REPORT
## ON EUROPEAN PATENT APPLICATION NO.

EP 24 19 7637

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2025

| Patent document cited in search report | Publication date | Patent family member(s) | Publication date |
|---|---|---|---|
| JP 2003254960 A | 10-09-2003 | NONE | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **COTE, A.** ; **ERDEMIR, D.** ; **GIRARD, K. P.** ; **GREEN, D. A.** ; **LOVETTE, M. A.** ; **SIROTA, E.** ; **NERE, N. K.** Perspectives on the Current State, Challenges, and Opportunities in Pharmaceutical Crystallization Process Development. *Cryst. Growth Des.*, 2020, vol. 20 (12), 7568-7581

- **RAJAGOPALAN, A. K.** ; **SCHNEEBERGER, J.** ; **SALVATORI, F.** ; **BÖTSCHI, S.** ; **OCHSENBEIN, D. R.** ; **OSWALD, M. R.** ; **POLLEFEYS, M.** ; **MAZZOTTI, M.** A comprehensive shape analysis pipeline for stereoscopic measurements of particulate populations in suspension. *Powder Technol.*, 2017, vol. 321, 479-493

- **SCHNEEBERGER, J.** ; **SALVATORI, F.** ; **BÖTSCHI, S.** ; **OCHSENBEIN, D. R.** ; **OSWALD, M. R.** ; **POLLEFEYS, M.** ; **MAZZOTTI, M.** A comprehensive shape analysis pipeline for stereoscopic measurements of particulate populations in suspension. *Powder Technol.*, 2017, vol. 321, 479-493